## Europäisches Patentamt
## European Patent Office
## Office européen des brevets

(19)

(11) Veröffentlichungsnummer: **0 017 756**
**B1**

(12) **EUROPÄISCHE PATENTSCHRIFT**

(45) Veröffentlichungstag der Patentschrift:
23.02.83

(51) Int. Cl.³: **B 64 C 9/06**

(21) Anmeldenummer: **80101297.2**

(22) Anmeldetag: **13.03.80**

(54) **Auftriebsklappe an einem Flugzeugtragflügel.**

(30) Priorität: **12.04.79 DE 2914974**

(43) Veröffentlichungstag der Anmeldung:
**29.10.80 Patentblatt 80/22**

(45) Bekanntmachung des Hinweises auf die Patenterteilung:
**23.02.83 Patentblatt 83/8**

(84) Benannte Vertragsstaaten:
**FR GB IT SE**

(56) Entgegenhaltungen:
**keine**

(73) Patentinhaber: **DORNIER GMBH, Postfach 1420,
D-7990 Friedrichshafen (DE)**

(72) Erfinder: **Matecki, Rudolf, Dipl.-Ing., Fliederweg 6,
D-7778 Markdorf (DE)**
Erfinder: **Zimmer, Herbert, Dipl.-Ing., Virchowstrasse 21,
D-7990 Friedrichshafen 2 (DE)**

(74) Vertreter: **Landsmann, Ralf, Dipl.-Ing., Kleeweg 3,
D-7990 Friedrichshafen 1 (DE)**

ACTORUM AG

## Auftriebsklappe an einem Flugzeugtragflügel

Die Erfindung betrifft eine Auftriebsklappe an einem Flugzeugtragflügel, welche auslenkbar an einem Lagerarm befestigt ist, der seinerseits am Tragflügel um eine Achse schwenkbar angeordnet ist.

Bei bisher bekannten Flugzeugen sind an den Tragflügeln zur Steuerung, z.B. um Roll- bzw. Querachse, Auftriebsklappen so angeordnet, dass sie um im Bereich der Klappenvorderkante angeordnete und vom Flugzeugtragflügel beispielsweise der Tragflügelhinterkante getragene Schwenkachsen im Sinne einer Änderung der Wölbung des Tragflügelprofils zur Auftriebserhöhung bzw. Auftriebsverminderung verstellbar sind.

Die erreichbare Manöverierfähigkeit, insbesondere bei schnellfliegenden Luftfahrzeugen, z.B. der Kurvenflug mit kleinen Kurvenradien, kann jedoch nur mit Hilfe grosser Anstellwinkel des Tragflügels durchgeführt werden, wobei das Flugzeug zumindest kurzzeitig in einen überzogenen Flugzustand geraten kann.

Innerhalb solcher Flugzustände mit grossen Anstellwinkeln kommt es zur teilweisen oder vollständigen, kontrollierten oder unkontrollierten Strömungsablösung an den tragenden Flächen des Flugzeugtragflügels und den Oberseiten der Steuerflächen bzw. Auftriebsklappen. Dadurch wird die Steuerbarkeit und damit insbesondere die Rückführung des Luftfahrzeuges in eine Normalfluglage stark beeinträchtigt und in gewissen Fällen unmöglich.

Durch die DE-OS 2 555 070 ist eine Klappenanordnung an der Hinterkante von Tragflügeln bekannt, die abwinkelbare Klappenträger zur schwenkbaren Aufnahme von Klappen über ein Schubkurbelgetriebe aufweist. Es sind bei der bekannten Klappenanordnung Klappenstellungen wahlweise zur Umlenkung von Triebwerksstrahlen oberhalb des Tragflügels zur Erzeugung einer Vertikalschubkomponente oder zur Erzeugung von Hochauftrieb möglich.

Bei beiden Ausschlagarten geraten die Klappen bei sich in überzogenen Flugzuständen befindlichem Flugzeug in den Windschatten des Tragflügels so, dass eine einwandfreie Steuerung beeinträchtigt bzw. unmöglich ist.

Die vorliegende Erfindung hat zur Aufgabe, die angeführten Nachteile zu vermeiden und eine Strömungsablösung an den tragenden Flächen der Auftriebsklappen bzw. den Steuerflächen unabhängig von Flugzuständen des Flugzeuges zu verhindern.

Die gestellte Aufgabe ist erfindungsgemäss dadurch gelöst, dass die Schwenkachse des Lagerarms in Neutralstellung der Klappe im Bereich der Klappennase angeordnet ist und dass die Auslenkbewegung der Klappe gegenüber dem Lagerarm und die Schwenkbewegung des Lagerarms gegenüber dem Tragflügel unabhängig voneinander steuerbar sind.

Mit einer solchen erfindungsgemässen Ausbildung ist erreicht, dass die Strömung an den Auftriebsklappen bzw. Steuerflächen auch im überzogenen Flugzustand des Flugzeuges, d.h. bei teilweise oder vollständig an der Tragflügeloberseite abgelöster Strömung, einwandfrei in Anlage gehalten wird und das Flugzeug auch innerhalb dieser Flugzustände manöverierbar bzw. steuerbar bleibt. Durch die voneinander unabhängige Verstellung von Lagerarm und Klappe sind Klappenstellungen möglich, bei denen die Klappe zu einem erheblichen Teil über die Tragflügelunterseite hinausragt und mit Hilfe des in dieser Stellung gebildeten Strömungsdurchganges zwischen Tragflügelhinterkante und Klappe eine einwandfreie Umströmung und damit Steuerwirksamkeit der Klappe aufrechterhalten werden kann. Die Auftriebsklappen sind aus der jeweils durch die Schwenkstellung der Tragarme eingestellte Lage der Klappenschwenkachse, ausgehend von der Neutralstellung in bezug auf die Anströmung, im Sinne positiver oder negativer Steuerausschläge verschwenkbar.

In normalen Anstellwinkelbereichen erfolgt die Steuerung des Flugzeugs durch Verschwenken der in Neutralstellung zu den Tragarmen stehenden Auftriebsklappen durch Verschwenken der Lagerarme gemeinsam mit den Auftriebsklappen.

Nach einer bevorzugten Ausführung ist vorgesehen, dass am Lagerarm eine in der Neutralstellung der Klappe mit deren Oberseite fluchtende Hilfsklappe befestigt ist. Diese Ausbildung stellt eine aerodynamisch günstige Anordnung dar, bei der sich durch das Zusammenwirken bei Relativverstellung der Klappenteile gegeneinander mit der Primärverstellung unterschiedliche aerodynamische Wirkungen erzielen lassen, wie z.B. die Wirkung der Klappen als konventionelle Querruder, als Manöverklappen, als Querruder bei abgelöster Strömung, als Elevons oder als Landeklappen. Diese grundsätzliche Funktionsweise kann je nach Anwendungszweck durch entsprechend abgewandelte kinematische Ausführungen erreicht werden.

Die Relativbewegung der Auftriebsklappen gegenüber den Lagerarmen bzw. den daran befestigten Hilfsklappen kann sowohl eine einfache Schwenkbewegung sein, wobei der Drehpunkt auf der Profilsehne liegt, als auch eine zusammengesetzte Bewegung, durch die ein Drehpunkt ausserhalb der Profilsehne oder eine bestimmte vorgegebene Bahn erreicht werden kann. Der Antrieb der Auftriebsklappen kann von den Lagerarmen oder vom Tragflügel aus erfolgen. Die Ausbildung erlaubt die Bildung eines Strömungsspaltes zwischen der Hilfsklappe und der Auftriebsklappe zur Hochauftriebserzeugung für Start und Landung und vergrösserte Steuerausschläge ohne Strömungsablösung.

Dadurch, dass der Lagerarm gegenüber dem Tragflügel durch einen ersten Stellmotor und die Auftriebsklappe gegenüber dem Lagerarm durch einen sich auf diesem abstützenden zweiten Stellmotor schwenkbar ist, wird eine vereinfachte Lagerung und eine vereinfachte Verstellung der Auftriebsklappen ermöglicht.

Es ist ferner in weiterer Ausgestaltung der Erfindung vorgesehen, dass die Auftriebsklappe mit dem Lagerarm und zwei Schwingen ein Viergelenkgetriebe bildet. Durch diese Anordnung ist es ermöglicht, die Schwenkachse der Auftriebsklappe weit ausserhalb der Flügelsehne anzuordnen bzw. die Klappe auf einer von einer Kreisbahn abweichenden, beliebigen vorgegebenen Bahn zu bewegen. Diese Ausbildung besitzt den Vorteil, dass die Lagerung der Auftriebsklappe am Luftangriffspunkt angeordnet werden kann. Zudem kann damit der effektive Drehpunkt der Auftriebsklappe in bezug auf die Tragflügeltiefe weiter nach hinten verlegt werden. Ausserdem lässt das Viergelenkgetriebe eine Spaltbildung zur Verbesserung der Hochauftriebswirkung zwischen der Auftriebsklappe und der Tragflügelhinterkante zu. Bei der Verstellung der Auftriebsklappe führt letztere zunächst eine Schwenkbewegung entgegengesetzt zur späteren Schwenkbewegung aus. Die Auftriebsklappe wird dadurch in die Stellung für eine Spaltbildung zwischen Hilfsklappe und Auftriebsklappe und daran anschliessend in entgegengesetzter Richtung in die Stellung für extreme Anstellwinkellagen des Flugzeuges verstellt.

In der Zeichnung sind zwei Ausführungsbeispiele gemäss der Erfindung dargestellt:

Fig. 1 zeigt in schematischer Darstellung das Prinzip der Klappenverstellung in einer Übersicht mit den Verstellmöglichkeiten der Auftriebsklappen, mit gegenüber der Anströmung normal angestelltem Flugzeugtragflügel;

Fig. 1a zeigt ebenfalls schematisch dargestellt Verstellmöglichkeiten der Auftriebsklappe bei extrem angestelltem Flugzeugtragflügel;

Fig. 2 zeigt in einem in Richtung der Profiltiefe des hinteren Teiles eines Flugzeugtragflügels geführten Querschnitt die Klappenanordnung in Verbindung mit einem Verstellgetriebe;

Fig. 2a zeigt in einem Ausschnitt eine Draufsicht der Anordnung nach Fig. 2;

Fig. 3 zeigt gegenüber der Darstellung gemäss Fig. 2 die Auftriebsklappe mit dem Verstellgetriebe in einer geänderten Ausschlagstellung, ebenfalls in einem schematisierten Querschnitt;

Fig. 4 zeigt eine weitere geänderte Ausschlagstellung der Auftriebsklappe gemäss Fig. 2 und 3;

Fig. 5 zeigt eine weitere Ausführungsform des Verstellgetriebes der Auftriebsklappe in einem in Richtung der Profiltiefe geführten Querschnitt durch den hinteren Teil eines Tragflügels;

Fig. 6 zeigt die Auftriebsklappe in einer gegenüber Fig. 5 geänderten Ausschlagstellung in gleicher Schnittführung wie bei Fig. 5;

Fig. 7 zeigt eine weitere mögliche Ausschlagstellung der Auftriebsklappe gemäss Fig. 5 bzw. 6;

Fig. 8 zeigt ebenfalls eine mögliche Ausschlagstellung der Auftriebsklappe gemäss Fig. 5 bis 7.

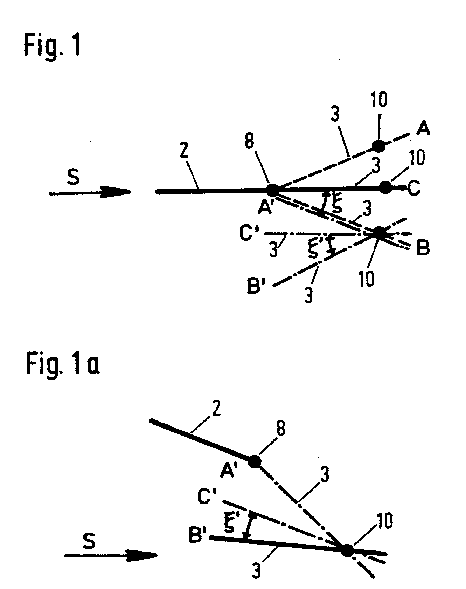

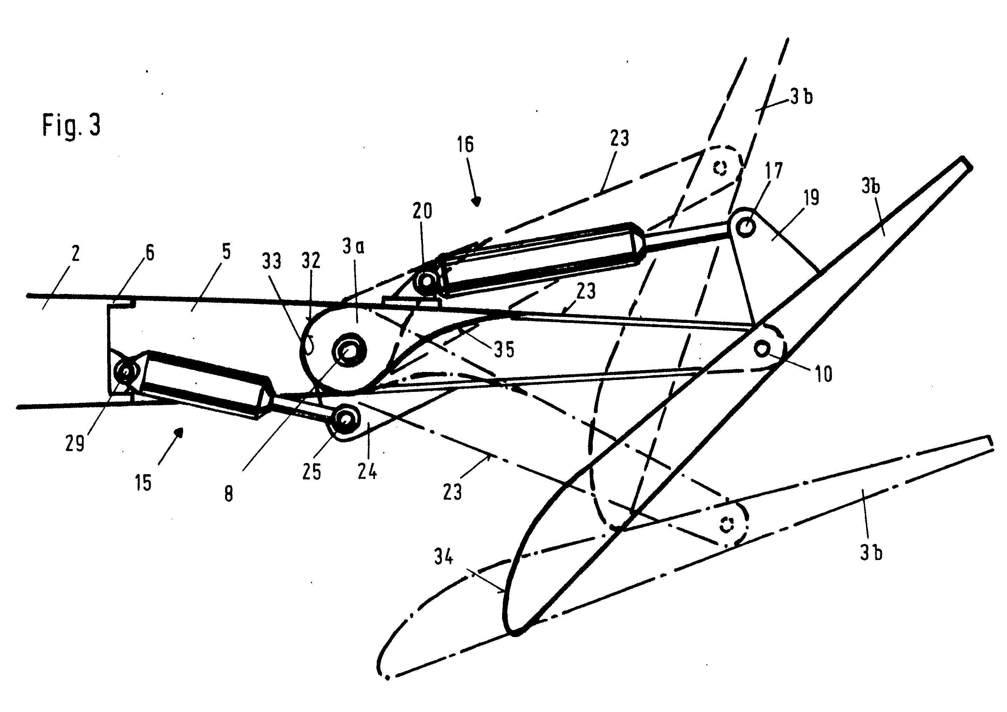

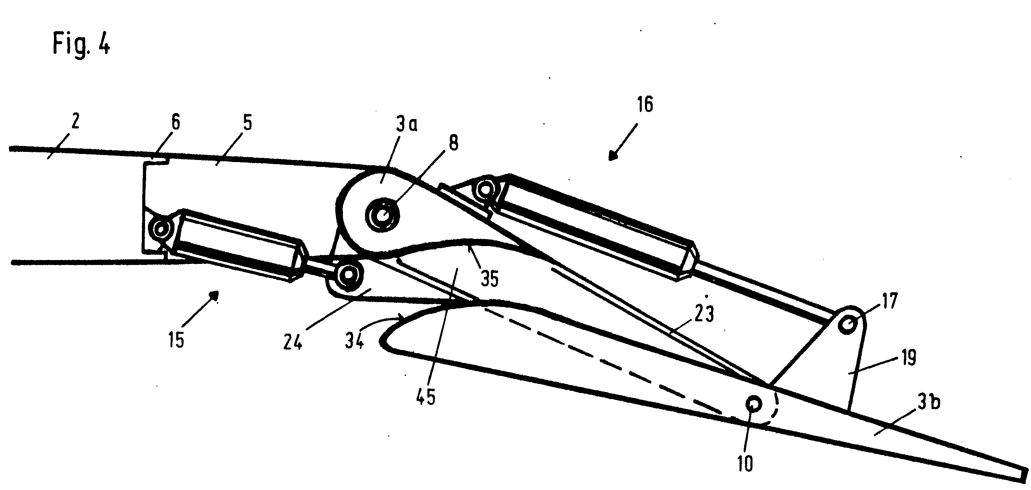

Die erfindungsgemässe Ausbildung ist sowohl für die Querruderbetätigung als auch für die Betätigung von Manöverklappen oder Elevons oder auch für Landeklappen einsetzbar. Die nachfolgende Beschreibung und die zugehörigen Zeichnungen Fig. 1 bis 3 sowie 5 bis 6 befassen sich als Ausführungsbeispiele mit der Anordnung bzw. Betätigung (von Flugzeugquerrudern), während die Ausführungen nach den Fig. 4, 7 bzw. 8 zusätzlich zur Querruderwirkung als Manöver- bzw. Landeklappen arbeiten können.

Der Vereinfachung halber ist in den Zeichnungen nur das Querruder der einen Flugzeugseite dargestellt. Die Verstellbewegung des nichtdargestellten Querruders ist der Bewegung des dargestellten Querruders entgegengesetzt gerichtet, soweit keine besonderen Hinweise gegeben sind.

In der Zeichnung ist eine Hälfte eines Tragflügels für Luftfahrzeuge mit einem der beiden Querruder zu beiden Seiten des Flugzeugrumpfes bzw. der senkrechten Flugzeuglängsmittelebene dargestellt. Die Erfindung beschränkt sich jedoch, wie bereits ausgeführt, nicht auf solche Querruder, sondern ist ebenso anwendbar auf sogenannte Elevans (Kombination aus Höhenruder und Querruder) für Fluggeräte mit Delta-Flügel oder Manöver- bzw. Landeklappen.

In der Zeichnung sind der Flugzeugtragflügel mit 2 und die Querruder insgesamt mit 3 bezeichnet. Die Querruder 3 sind um eine quer zur Flügeltiefe gerichtete und von Längsträgern 5 am hinteren Tragflügelholm 6 im Bereich ihres Nasenteiles aufgenommene erste Schwenkachsen 8 verstellbar. Für die Querruder 3 sind zweite Schwenkachsen 10 vorgesehen, die parallel zu den ersten Schwenkachsen 8 liegen. Die zweiten Schwenkachsen 10 können auf einer Kreisbahn um die ersten Achsen 8 parallel verstellt und in einer solchen Stellung arretiert werden. Die Schwenkbewegung der Querruder 3 kann getrennt oder gemeinsam, also in einer Überlagerungsbewegung, sowohl um die ersten Schwenkachsen 8 als auch die zweiten Schwenkachsen 10 erfolgen.

In Fig. 1 sind die grundsätzlich möglichen Endstellungen der zweiten Schwenkachsen 10 bzw. der Querruder 3 um die ersten und zweiten Schwenkachsen 8 bzw. 10 angedeutet. Für den normalen Querruderausschlag sind die Endausschlagstellungen A bzw. B mit der Neutrallage C gestrichelt und die Endausschlagstellungen A' bzw. B' mit der Neutralstellung C' für den Bereich grosser Tragflügelanstellwinkel strichpunktiert dargestellt. Die Ausschlagwinkel sind dabei mit ξ bzw. ξ' bezeichnet.

In Fig. 1a der Prinzipdarstellung ist der Tragflügel 2 in einer Anstellung mit relativ grossem Winkel gegenüber der Anströmung S gezeigt. Dabei sind die Querruder 3 sowohl um die ersten Schwenkachsen 8 als auch um die zweiten Schwenkachsen 10 in eine Anstellwinkellage gegenüber der Anströmung S verstellt, in der die Strömung an den Querrudern 3 in Anlage ist, unabhängig von der Umströmung des Tragflügels 1.

Zur Einstellung der Ausschlagbereiche A, B bzw A', B' um die ersten bzw. zweiten Schwenkachsen 8 bzw. 10 sind hier hydraulisch arbeitende Stellmotoren mit Druckzylindern und Stellkolben angeordnet. Es ist für jedes der erforderlichen Querruder 3 ein erster und ein zweiter Stellmotor 15 bzw. 16 vorgesehen. Der eine dieser Stellmotoren 15 dient zur Einstellung bzw. Verstellung der Querruder 3 um die ersten Schwenkachsen 8 für den Normalausschlag, wobei bei dieser Normalverstellung die zweiten Schwenkachsen 10, wie bereits beschrieben, auf einer Kreisbahn um die Schwenkachsen 8 mitverstellt werden. Der Stellzylinder 21 der zweiten Stellmotoren 16 stützt sich ortsfest über Schwenkachsen 20 ab, was später noch näher erläutert ist. Der Arbeitskolben 18 der Stellmotoren 16 greift an den Querrudern 3 über einen an diesen festen Kurbelhebel 19 mittels einer Schwenkachse 17 an. Der Angriffspunkt 17 liegt dabei in einem gewissen Abstand von der zugehörigen zweiten Schwenkachse 10.

Die ersten Stellmotoren 15 sind zwischen dem Flugzeugtragflügel 2 und Tragarmen 23 eingesetzt, wobei die Tragarme 23 von den ersten Schwenkachsen 8 aufgenommen sind. Für die Verstellung der zu beiden Seiten der Querruder 3 liegenden Tragarme 23 sind feste Kurbelhebel 24 vorgesehen, an denen über Schwenkachsen 25 die Arbeitskolben 26 der ersten Stellmotoren 15 in einem gewissen Abstand von den ersten Schwenkachsen 8 angreifen. Die Stellzylinder 27 stützen sich ortsfest über Schwenkachsen 29 am hinteren Tragflügelende bwz. am hinteren Tragflügelholm 6 ab.

Die Querruder 3 bestehen aus je zwei Klappenteilen 3a bzw. 3b, von denen die Klappenteile 3a ein kreisförmiges Nasenteil 32 aufweisen, das in einer entsprechend ausgebildeten kreisförmigen Ausnehmung 33 am Tragflügel 2 liegt. Die Klappenteile 3a sind um die ersten Schwenkachsen 8 gegenüber dem Flugzeugtragflügel 2 beweglich. Der hintere Abschnitt dieser Klappenteile 3a ist entsprechend der profilierten Vorderkante 34 der zweiten Klappenteile 3b ausgebildet, so dass die beiden Querruderteile 3a und 3b gemeinsam je die Gesamtquerruder 3 darstellen. Die Klappenteile 3a bzw. 3b sind somit gemeinsam um die ersten Schwenkachsen 8 und ausserdem um die ersten und zweiten Schwenkachsen 8 bzw. 10 unabhängig voneinander schwenkbar.

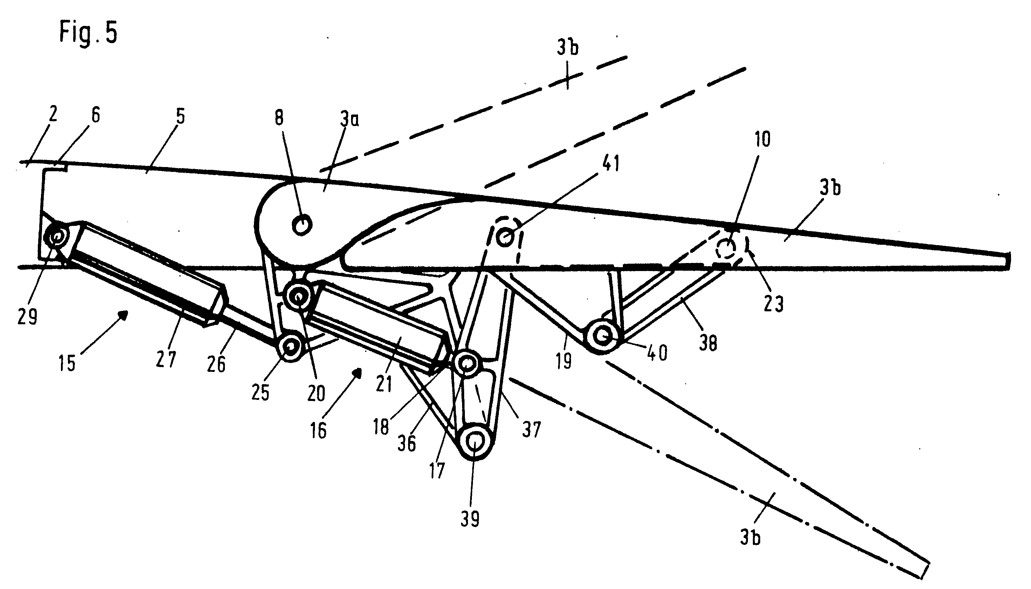

In den Fig. 5 bis 8 ist ein weiteres Ausführungsbeispiel für die Anordnung und Verstellung der Querruder 3 dargestellt.

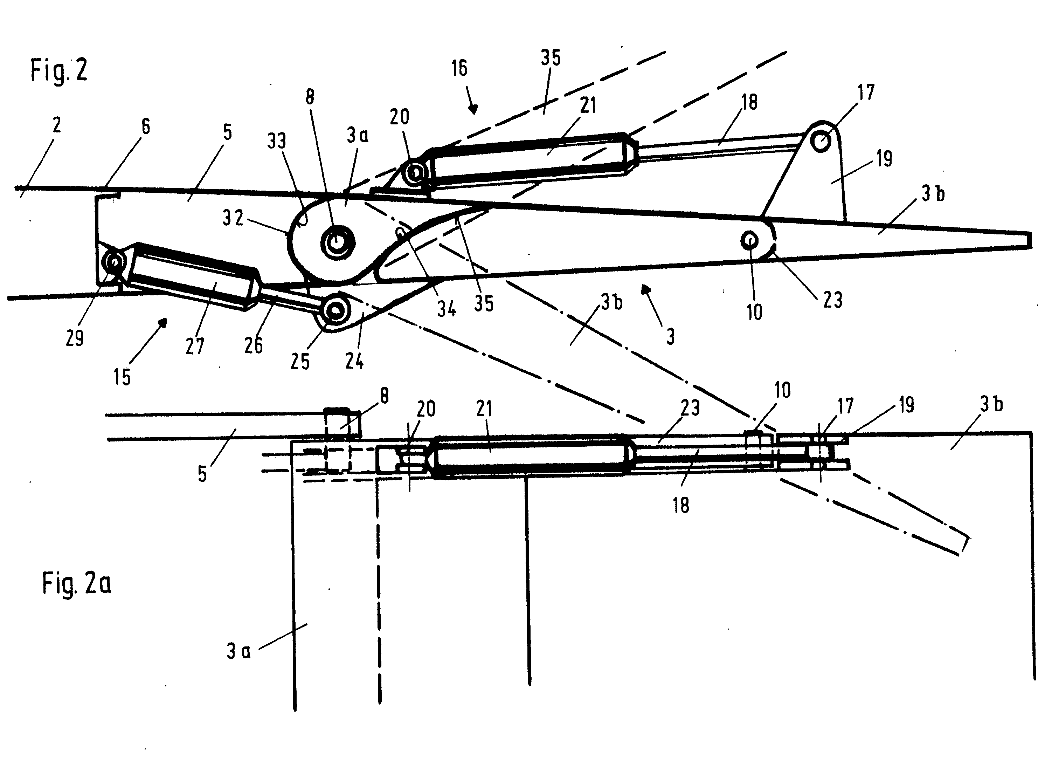

Bei dieser Ausführung ist gegenüber der Ausführung nach Fig. 2 bis 4 vorgesehen, dass die Relativbewegung der Klappenteile 3b gegenüber den Klappenteilen 3a auf einer vorgegebenen Bahn erfolgt, wobei die Drehzentren dieser Bahn weit ausserhalb der Sehne der Querruder 3 liegen. Die zweiten Stellmotoren 16 sind hierbei unterhalb der Querruder 3 angeordnet.

Dazu ist vorgesehen, dass die Klappenteile 3a, wie bei der Ausführung gemäss Fig. 2 bis 4, einen Kurbelhebel 24 tragen, an dem über die Schwenkachsen 25 die ersten Stellmotoren 15 angreifen.

Die Verstellung der Teile 3a erfolgt um die ersten Schwenkachsen 8. An den Klappenteilen 3a sind Kurbelhebel 36 befestigt, welche die Schwenkachsen 39 in relativ grossem Abstand zur Querrudersehne tragen. Am Kurbelhebel 36 bzw.

den Tragarmen 23 und den Klappenteilen 3b greifen über die Schwenkachsen 39 bzw. 10 sowie 41 bzw. 40, Schwingen 37 bzw. 38 an, so dass diese Teile ein Viergelenk bilden.

Die Wirkungsweise der vorangehend beschriebenen Ausführungen ist wie folgt

Zwei mögliche Betätigungsarten für die Querruder 3 sind die normale gegenläufige Verstellung der beiden Klappenteile 3a und 3b gemeinsam in gestreckter Stellung um die ersten Schwenkachsen 8 (Fig. 2 und 5), bezogen auf die senkrechte Flugzeuglängsmittelebene und die gegenläufige Verstellung bei teilweiser oder vollständiger Ablösung der Strömung an der Oberseite des Flugzeugtragflügels 2, bei der die zweiten Klappenteile 3b getrennt von den ersten Klappenteilen 3a um die zweiten Schwenkachsen 10 in Anstellwinkellagen gleichsinnig und unabhängig vom Tragflügel 2 bewegt werden.

In der Zeichnung gemäss den Ausführungen nach Fig. 2 und 5 stehen die Querruder 3, wie in ausgezogenen Strichen dargestellt, in Neutralstellung C. Desgleichen auch die zu jedem der Querruder 3 gehörigen ersten und zweiten Stellmotoren 15 bzw. 16. Die Klappenteile 3a und 3b bilden gemeinsam das Querruderprofil.

Für einen Querruderausschlag sind die ersten Stellmotoren 15 über hier der Einfachheit halber nicht dargestellte Steuereinrichtungen üblicher Bauart vom Piloten betätigt und die Querruder 3 insgesamt bis in maximale Ausschlagstellungen A bzw. B, wie in der Zeichnung Fig. 2 und 5 strichpunktiert angedeutet, entgegengesetzt verstellbar.

Reisst die Strömung am Tragflügel innerhalb überzogener Flugzustände bzw. extremer Tragflügelanstellungen teilweise oder vollständig ab, so werden die zweiten Stellmotoren 16 betätigt. Die Betätigung kann dabei sowohl vom Piloten unmittelbar als auch in Abhängigkeit von einer Einrichtung automatisch bewirkt werden, welche die Anstellwinkelwerte misst und entsprechende Steuersignale erzeugt.

Bei den Ausführungsformen nach Fig. 2 bis 4 werden durch die Betätigung der zweiten Stellmotoren 16 die Klappenteile 3b gegenüber dem Klappenteil 3a um die zweiten Schwenkachsen 10 in gleichem Schwenksinn verstellt. Dabei werden die Klappenteile 3b mit ihrem Nasenteil 34 gegenüber dem Tragflügel 2 abwärts geneigt, und zwar in eine Stellung, in der die Klappenteile 3b unabhängig von der Anstellung des Tragflügels 2 mit anliegender Strömung an ihrer Oberseite arbeiten. Diese Bewegung kann auch aufgefasst werden als eine Zurückführung der Klappenteile 3b in eine strömungsgünstige Lage, in der die Ruderwirksamkeit erhalten ist. Ausgehend von der neuen um die zweiten Schwenkachsen 10 eingestellten Lage der Klappenteile 3b sind Steuerausschläge für Rollbewegungen um die Flugzeuglängsachse im einen oder anderen Drehsinn möglich. Das teilweise oder vollständige Abreissen der Strömung über dem Flugzeugtragflügel 2 hat damit keinen Einfluss auf die Steuerbarkeit durch die Klappenteile 3b. Das Fluggerät bleibt manövrierfähig und kann damit aus der extremen Fluglage in andere Fluglagen übergeführt werden.

Dabei kann die von der Anstellung des Tragflügels abhängig arbeitende Einrichtung auf die zweiten Stellmotoren 16 einwirken, so dass der Pilot ohne zusätzliche Betätigung in üblicher Weise durch seinen Steuerknüppel auf die Querruder zur Einstellung der Roll-Lage seines Flugzeuges einwirkt.

Bei der Ausführung gemäss Fig. 5 bis 8 ist die Wirkungsweise so, dass zum Unterschied gegenüber der Ausführung nach Fig. 2 bis 4 die Verstellung der Klappenteile 3b mittels des Viergelenkes 39, 41; 40, 10; 37, 38 und 3b erfolgt. Wie die Fig. 5 im einzelnen erkennen lässt, wird auch hierbei der normale Querruderausschlag mittels der Betätigung der ersten Stellmotoren 15 in gegensinniger Weise bewirkt. Die möglichen maximalen Ausschlagstellungen sind gemäss Fig. 1 und 1a die Stellungen A bzw. B. Verschwenkt werden bei dieser Verstellbewegung jeweils die beiden Klappenteile 3a und 3b der Querruder 3 gemeinsam um die ersten Schwenkachsen 8 mittels der ersten Stellmotoren 15.

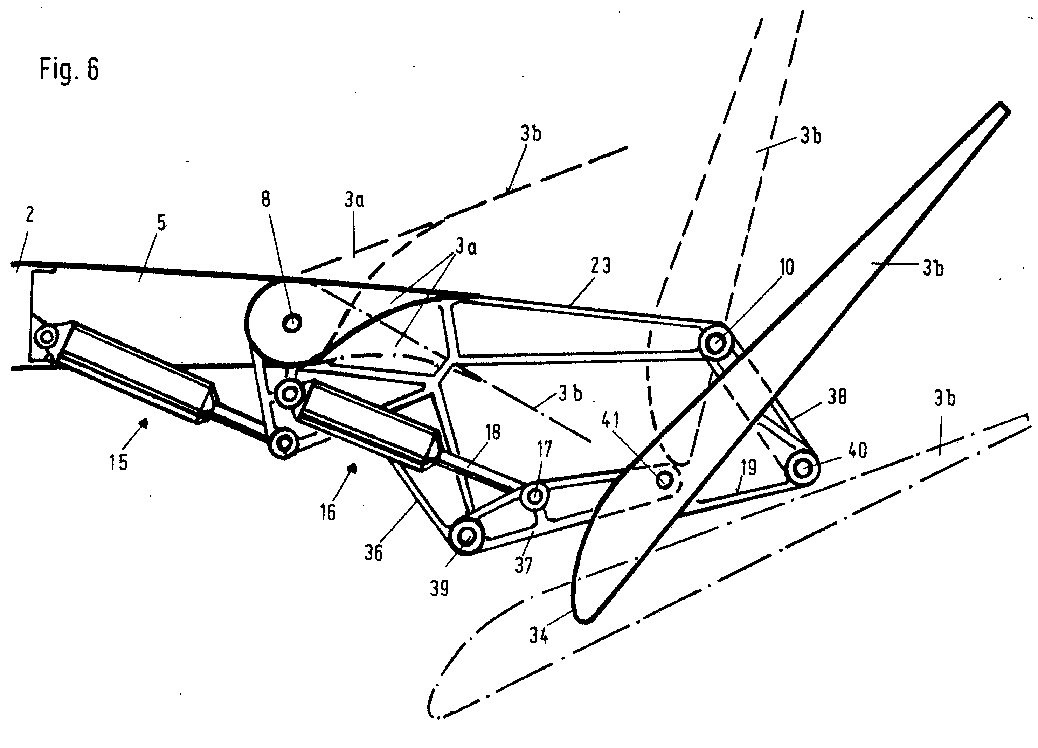

Für extreme Anstellungen des Tragflügels 2 werden die bei den normalen Querruderausschlägen mit den Querrudern 3 in Ruhelage befindlichen zweiten Stellmotoren 16 betätigt (Fig. 6).

Dabei werden die Klappenteile 3b der Querruder 3 jeder Flugzeugseite mittels der zweiten Stellmotoren 16 über die Schwingen 37 bzw. 38 auf vorgegebenen Bahnen in gleichem Schwenksinne je nach der Grösse des Tragflügelanstellwinkels mit ihrer Profilnase 34 gegenüber dem Tragflügel 2 abwärts bewegt.

Die vorangehend beschriebene zweite Ausführung nach Fig. 5 bis 8 weist den Vorteil auf, dass die Schwenkachsen 40 und 41 für die Klappenteile 3b in der Nähe des Luftangriffspunktes angeordnet sind. Ferner lässt sich damit der effektive Drehpunkt der Klappenteile 3b relativ weit in Richtung der Tragflügeltiefe nach hinten verlegen.

Bei den Ausführungsbeispielen gemäss Fig. 2 bis 4 und Fig. 5 bis 8 ist zusätzlich zur Verstellung der Querruder 3 für die normale Rollsteuerung mittels der ersten Stellmotoren 15, wie in den Fig. 4 bzw. 7 und 8 dargestellt, auch eine Verstellbewegung der Klappenteile 3b gegenüber den Klappenteilen 3a mit Bildung eines Strömungsspaltes 45 möglich.

Bei der Ausführung gemäss Fig. 2 bis 4 wird zur Rollsteuerung die Verstellung der Klappenteile 3b durch Betätigung der zweiten Stellmotoren 16 bewirkt. Die zweiten Stellmotoren 16 arbeiten dabei so, dass die Klappenteile 3b gegenüber den Klappenteilen 3a, wie aus Fig. 4 zu erkennen ist, um die zweiten Schwenkachsen 10 mit ihrer Profilnase 34 vom Tragflügel 2 bzw. den ersten Klappenteilen 3a ausgehend abwärts geneigt werden. Dadurch entsteht in einer Ausschlagstellung der beiden Klappenteile 3b zwischen der Ausnehmung 35 an den Klappenteilen 3a und dem Nasenteil 34 der Klappenteile 3b ein Strömungsspalt 45, durch den die Strömung von der Tragflügelunterseite zur -oberseite der Klappenteile 3b mit der bekannten Düsenwirkung zur Erzielung einer möglichst einwandfrei anliegenden Strömung bzw. zur Erzielung einer Hochauftriebswirkung geleitet werden kann.

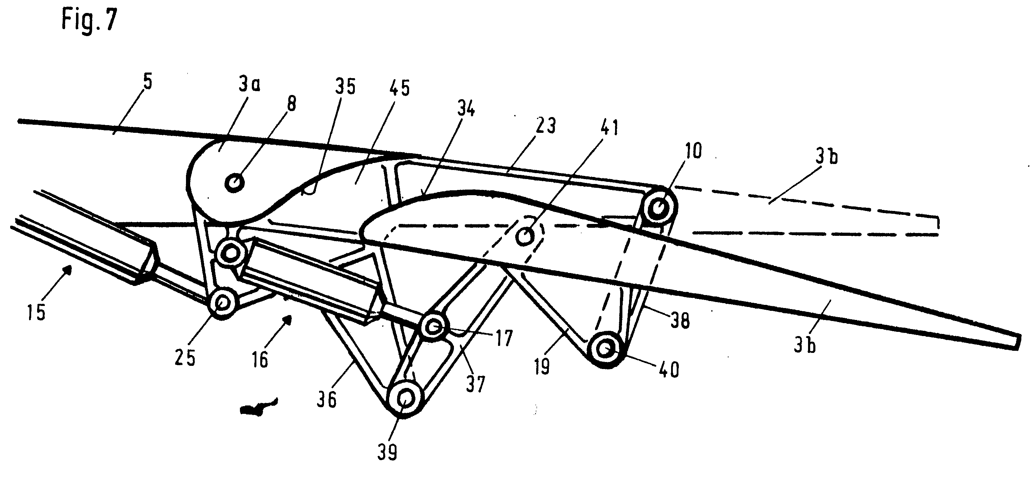

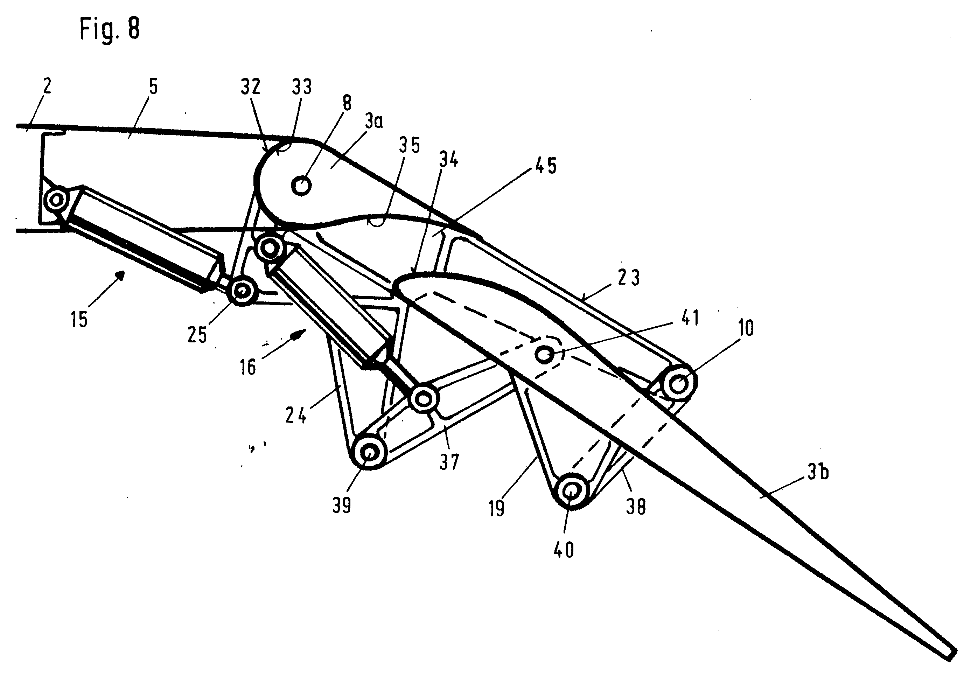

Bei der Ausführungsform gemäss Fig. 5 bis 8 ist das Viergelenkgetriebe 39, 41; 10, 40; 37, 38; 3b so ausgelegt, dass zu Beginn der Verstellung der Klappenteile 3b letztere eine Schwenkung ausführen, bei der die Profilnase 34 dieser Klappenteile 3b aufwärts verstellt und gleichzeitig diese Klappenteile 3b in Richtung der Profiltiefe des Tragflügels 2 bewegt werden. Bei einer weiteren Verstellung der Klappenteile 3b wird dann die Profilnase 34, wie auch bei der Ausführung gemäss Fig. 2 bis 4, abwärtsgerichtet bewegt, und zwar in Stellungen, wie sie z.B. in Fig. 6 in ausgezogenen bzw. strichpunktierten Linien angedeutet sind. Mit der Verstellbewegung, wie in Fig. 7 und 8 gezeigt, wird ebenfalls zwischen dem Nasenteil 34 der Klappenteile 3b und der entsprechenden Ausnehmung 35 am Klappenteil 3a der bereits beschriebene Strömungsspalt 45 gebildet.

## Patentansprüche

1. Auftriebsklappe (3b) an einem Flugzeugtragflügel (2), welche auslenkbar an einem Lagerarm (23) befestigt ist, der seinerseits am Tragflügel (2) um eine Achse (8) schwenkbar angeordnet ist, dadurch gekennzeichnet, dass die Schwenkachse (8) des Lagerarms (23) in Neutralstellung der Klappe (3b) im Bereich der Klappennase (34) angeordnet ist, und dass die Auslenkbewegung der Klappe (3b) gegenüber dem Lagerarm (23) und die Schwenkbewegung des Lagerarms (23) gegenüber dem Tragflügel (2) unabhängig voneinander steuerbar sind.

2. Auftriebsklappe nach Anspruch 1, dadurch gekennzeichnet, dass am Lagerarm (23) eine in der Neutralstellung der Klappe mit deren Oberseite fluchtende Hilfsklappe (3a) befestigt ist.

3. Auftriebsklappe nach Anspruch 1 oder 2, dadurch gekennzeichnet, dass der Lagerarm (23) gegenüber dem Tragflügel (2) durch einen ersten Stellmotor (15) und die Klappe (3b) gegenüber dem Lagerarm (23) durch einen sich auf diesem abstützenden zweiten Stellmotor (16) schwenkbar ist.

4. Auftriebsklappe nach Anspruch 1 bis 3, dadurch gekennzeichnet, dass die Klappe (3b) mit dem Lagerarm (23) und zwei Schwingen (37, 38) ein Viergelenkgetriebe bildet.

## Claims

1. Lift generating flap (3b) for aircraft lift wings (2) which flap is pivotable supported at a support arm (23) which arm is adapted to pivot about a shaft (8), characterised in that the pivot shaft (8) of the support arm (23) in neutral position of the lift generating flap (3b) is mounted in the region of the flap nose (34) and the pivoting motion of the lift generating flap (3b) with respect to the support arm (23) and the pivoting motion of the support arm (23) with respect to the aircraft lift wing (2) are mutually independently controllable.

2. Lift generating flap, according to claim 1, characterised in that an auxiliary flap (3a) is mounted on the support arm (23) and in neutral position of the lift generating flap (3b), the upper side of the lift generating flap (3b) and the upper side of the auxiliary flap (3a) are in alignment.

3. Lift generating flap, according to claim 1 or 2, characterised in that a first setting motor (15) is mounted between the aircraft lift wing (2) and the support arm (23), and a secound setting motor (16) is mounted between the support arm (23) and the lift generating flap (3b).

4. Lift generating flap, according to claim 1 to 3, characterised in that, the lift generating flap (3b) together with the support arm (23) and two beams (37, 38) are a four-link unit.

## Revendications

1. Volet d'ascension (3b) pour une aile porteuse d'avion (2), qui est monté orientable sur un bras de support (23) lequel, de son côté, est monté pivotant autour d'un axe (8) sur l'aile porteuse (2), caractérisé en ce que l'axe de pivotement (8) du bras de support (23) est, dans la position neutre du volet (3b), disposé au voisinage du nez (34) du volet et en ce que les mouvements de déplacement du volet (3b), par rapport au bras de support (23), et les mouvements de pivotement du bras de support (23) par rapport à l'aile (2) peuvent être commandés indépendamment l'un de l'autre.

2. Volet d'ascension selon la revendication 1, caractérisé en ce que, sur le bras de support (23), est fixé un volet auxiliaire (3a) qui, dans la position neutre du volet, vient se placer dans le plan de la face supérieure de ce dernier.

3. Volet d'ascension selon la revendication 1 ou 2, caractérisé en ce que le bras de support (23) peut pivoter par rapport à l'aile porteuse (2), sous l'action d'un premier moteur de réglage (15) et en ce que le volet (3b) peut être déplacé par rapport au bras de support (23) par un second moteur de réglage (16), prenant appui sur ce dernier.

4. Volet d'ascension selon l'une des revendications 1 à 3, caractérisé en ce que le volet (3b) constitue avec le bras de support (23) et avec deux leviers basculants (37, 38) un mécanisme d'articulation en forme de quadrilatère déformable.

# Fig. 1

# Fig. 1a

Fig. 2

Fig. 2a

Fig. 3

Fig. 4

0 017 756

Fig. 5

0 017 756

Fig. 6

0 017 756

Fig.7

0 017 756

Fig. 8